# EUROPEAN PATENT SPECIFICATION

(11) **EP 3 604 872 B1**
(45) Date of publication and mention of the grant of the patent: **15.09.2021**
(21) Application number: 19189503.6
(22) Date of filing: 31.07.2019
(51) Int. Cl.: F16K 5/06, F16K 37/00

(54) **REPAIR ALARM DEVICE FOR SMART VALVE**
REPARATURALARMVORRICHTUNG FÜR EIN INTELLIGENTES VENTIL
RÉPARATION DE DISPOSITIF D'ALARME POUR SOUPAPE INTELLIGENTE

(30) Priority: 01.08.2018 TW 107126654
(43) Date of publication of application: 05.02.2020
(73) Proprietor: Bion Inc., 241 New Taipei City (TW)
(72) Inventor: Chen, Yu-Yu, 241 New Taipei City (TW)
(74) Representative: Lang, Christian

(56) References cited:
- EP-A1- 3 267 274
- CN-A- 106 015 724
- CN-A- 107 091 364
- DE-A1-102016 216 707
- JP-A- H07 217 761
- US-A1- 2003 014 161
- US-A1- 2013 206 258
- US-A1- 2014 230 925
- US-A1- 2015 176 718

## Description

### BACKGROUND OF THE INVENTION

### 1. Field of the invention

The present invention relates to a repair alarm device, in particular to a repair alarm device for smart valve.

### 2. Description of the prior art

A valve is a mechanism used to control the flow rate, the flow direction, the pressure, the temperature, etc. of a flowing fluid medium. For example, a flow control valve is a frequently-used mechanism, which usually includes a valve body and a valve base. The two ends of the valve body are usually provided with a fluid inlet and a fluid outlet, and there is a valve base disposed between the fluid inlet and the fluid outlet. Adjusting the position of the valve base disposed between the fluid inlet and the fluid outlet can completely disconnect the fluid inlet and the fluid outlet, or change the flow rate between the fluid inlet and the fluid outlet.

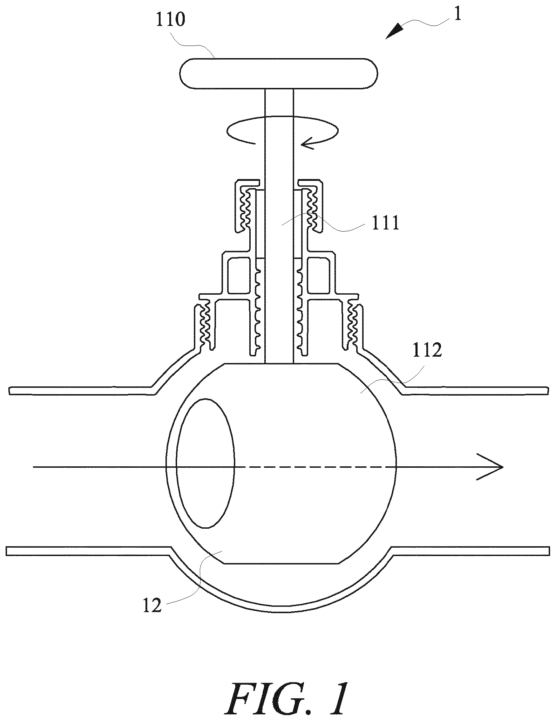

For instance, please refer to FIG. 1, which is a diagram illustrating appearance of a currently available ball control valve. In general, the hand wheel 110 of the ball control valve 1 can be manually rotated clockwise/counterclockwise. The hand wheel 10 is connected to one end of the valve stem 111 and the other end of the valve stem 111 is connected to the valve base 112. In this way, the valve base 112 can be rotated with the hand wheel 110 so as to control the flow rate between the fluid inlet 12 and the fluid outlet 1 of the valve body 14 or completely disconnect the fluid inlet 12 from the fluid outlet 13 to achieve the close status. Besides, a valve manufacturer develops a valve which can be controlled by an electronic component to open or close, as disclosed by China Utility Model Patent No.: CN203548977. The patent discloses a two-way valve which can control the flow rate of compressed natural gas in high precision; the patent not only can control the valve to open or close, but also can calculate the flow rate of the valve.

The components of the ball control valve 1 will have mechanical consumption in different degrees after having been used for a long time. Thus, some components of the ball control valve 1 may be damaged; the hand wheel 110 and the valve base 112 are most easily damaged components. Accordingly, the most frequently-used method for determining whether the usage status information of the ball control valve 1 is normal is recording the rotation times of the hand wheel 110 by a human. However, it is not reliable to record the rotation times only by human's memory. Similarly, writing down the rotation times of the hand wheel 110 also cannot precisely and effectively record the rotation times of the hand wheel 110. Thus, the repair technician cannot immediately understand the current status of the ball control valve 1 or anticipate that the ball control valve 1 may malfunction in a short time. The repair technician cannot know that the ball control valve 1 has malfunctioned until the valve base 122 cannot disconnect the fluid inlet 12 from the fluid outlet 13, and the fluid keeps flowing out of the fluid output 13; meanwhile, a lot of unnecessary losses may have incurred. Moreover, China Utility Model Patent No.: CN205317464 discloses a natural gas high-pressure ball valve service life test device for calculating the service life of a valve; however, the device cannot be used in a piping construction site.

Furthermore, Watts Water Technologies provides an electronic actuator. The electronic actuator can be connected to a ball valve and the user can install an application, named Axmart, to open and close the valve, and record the time points when the electronic actuator is used. However, the application cannot record the switching times of the valve.

Patent application publication US 2003/0014161 A1 discloses a valve control system having the features of the preamble of claim 1. Further control mechanisms are known from patent application publications DE 10 2016 216 707 A1, JP H07-217761 A, US 2014/0230925 A1 and US 2013/0206258 A1.

Therefore, the present invention provides a repair alarm device for smart valve for repair technicians to anticipate the usage status information of a valve, such as the switching time of the valve, and then replace the valve before the valve malfunctions to reduce unnecessary losses in order to solve the above problems.

### SUMMARY OF THE INVENTION

So as to solve the problems of the prior art, the present invention is aimed to provide a device capable of calculating and recording the usage status information of a valve, such that the problem that the usage status information of currently available valves cannot be anticipated can be solved.

To achieve the foregoing objective, the present invention provides a repair alarm device for smart valve having the features of claim 1. Further embodiments are subj ect-matter of the dependent claims. The valve at least includes a valve body, a valve stem and a valve base. The valve body is installed between the pipes of a fluid piping and the valve base is disposed inside the valve body. One end of the valve stem extends into the valve body to connect to the valve base, and the other end thereof protrudes from the valve body, such that the valve base can move with the valve stem. The usage status recording device includes a connection unit, a control unit and a driver unit. The connection unit is connected to the valve stem and provided with a sensing target moving with the valve stem. The control unit is provided with a sensing element. When the driver unit is in operation, the driver unit drives the connection unit to make the valve stem move with the connection unit, such that the valve stem drives the valve base to move. Meanwhile, the movement of the valve stem between the sensing target and the sensing element is detected by the sensing element to generate a sensing signal. The control unit generates a usage status information according to the sensing signal. The control unit according to the invention further includes a temperature sensing unit.

In a preferred embodiment, the repair alarm device further includes a power source unit connected to the control unit to supply power to the control unit.

In a preferred embodiment, the control unit further includes a calculation module and a transmission module. The calculation module is connected to the sensing element to calculate the usage status information of the smart valve according to the sensing signal. The transmission module is connected to the calculation module to transmit the usage status information to an external device.

In a preferred embodiment, the temperature sensing unit is connected to the calculation module to detect a flow temperature in the valve body in order to generate a temperature or disposed on a circuit board to detect the environment temperature signal. Then, the calculation module calculates a temperature value according to the temperature signal and the transmission module transmits the temperature value to the external device.

In a preferred embodiment, the control unit further includes an output unit. The output unit is connected to the calculation module to receive and output the usage status information and the temperature value.

As describe above, the present invention can achieve one or more of the following technical effects:
1. The user can directly read the usage status information via the output unit and understand the usage status of the valve according to the usage status information.
2. The user can remotely read the usage status information via the external device and understand the usage status of the valve according to the usage status information.
3. The usage status information may be the rotation times of the valve base, the position of the valve base, the flow rate, etc.; the user can determine whether the valve malfunctions or not according to the usage status information, and can immediately repair the valve.

### BRIEF DESCRIPTION OF THE DRAWINGS

For a better understanding of the aforementioned embodiments of the invention as well as additional embodiments, not according to the invention, reference should be made to the Description of Embodiments below, in conjunction with the following drawings in which like reference numerals refer to corresponding parts throughout the figures.
Fig. 1 is a schematic view of a currently available ball control valve.

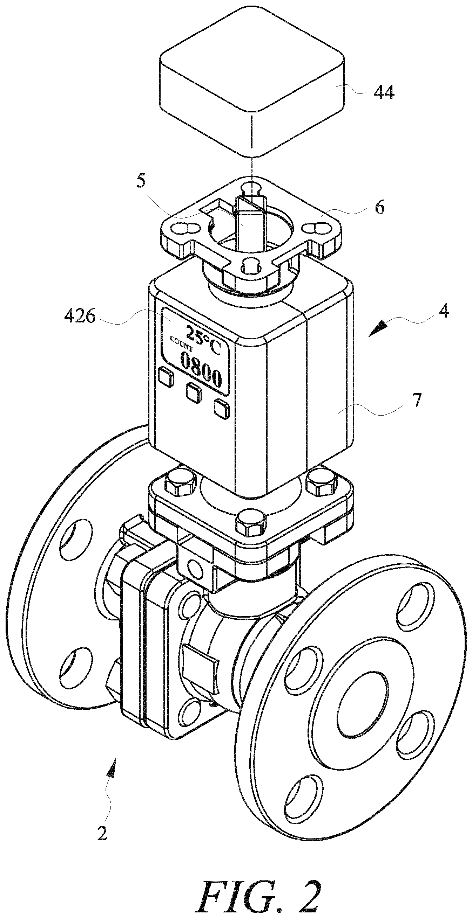

Fig. 2 is a schematic view of a repair alarm device for smart valve in accordance with one embodiment of the present invention.
Fig. 3A is an exploded view of Fig. 2.
Fig. 3B is an exploded view of an embodiment of a valve, not according to the invention.

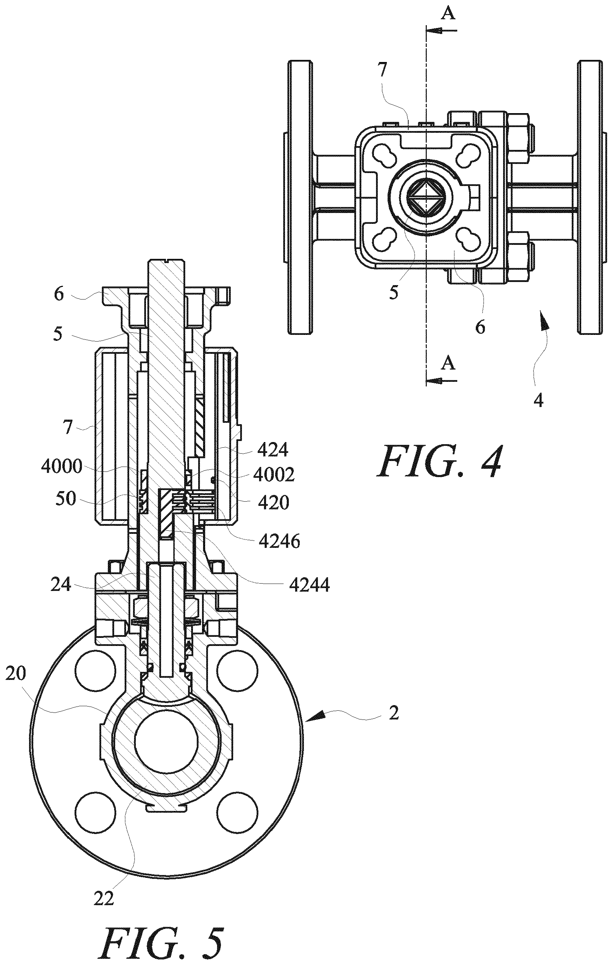

Fig. 4 is a top view of assembly of Fig. 2.
Fig. 5 is a top view of cross-section of Fig. 4.
Fig. 6 is a circuit block diagram in accordance with one embodiment of the present invention.

### DETAILED DESCRIPTION OF THE PREFERRED EMBODIMENT

The following description is about embodiments of the present invention.

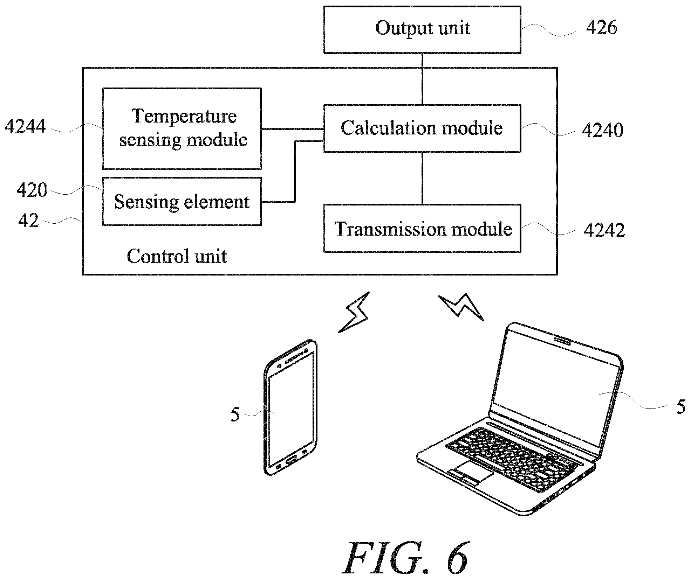

Please refer to Fig. 1 ∼ Fig. 6; the prevent invention provides a repair alarm device for smart valve, wherein the valve 2 means the device installed in at least one of the pipes of a fluid piping in order to control the flow rate of the pipe. In general, the valve 2 at least includes a valve body 20, a valve base 22 and a valve stem 24. The valve body 20 is installed between the pipes of the fluid piping. The valve base 22 is disposed inside the valve body 20. One end of the valve stem 24 extends into the valve body 20 to connect to the valve base 22, and the other end thereof protrudes from the valve body 20, such that the valve base 22 can move with the valve stem 24 so as to control the flow rate of the outlet of the valve body 20.

According to the present invention, the repair alarm device 4 includes a connection unit 40, a control unit 42 and a driver unit 44. The connection unit 40 is connected to the valve stem 24 and the connection unit 40 is provided with a sensing target 400 moving with the valve stem 24. The control unit 42 is provided with a sensing element 420. When the driver unit 44 is in operation, the driver unit 44 drives the connection unit 40 to make the valve stem 24 move with the connection unit 40, such that the valve stem 24 drives the valve base 22 to move. Meanwhile, the movement of the valve stem 24 between the sensing target 400 and the sensing element 420 is detected by the sensing element 420 to generate a sensing signal. The control unit 42 generates a usage status information of the valve 2 according to the sensing signal.

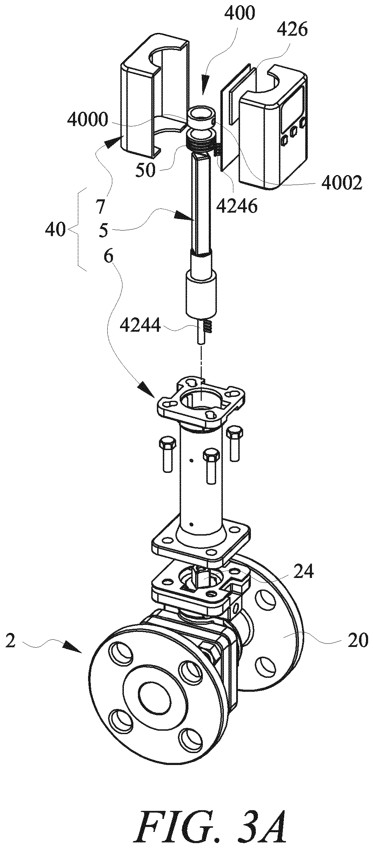

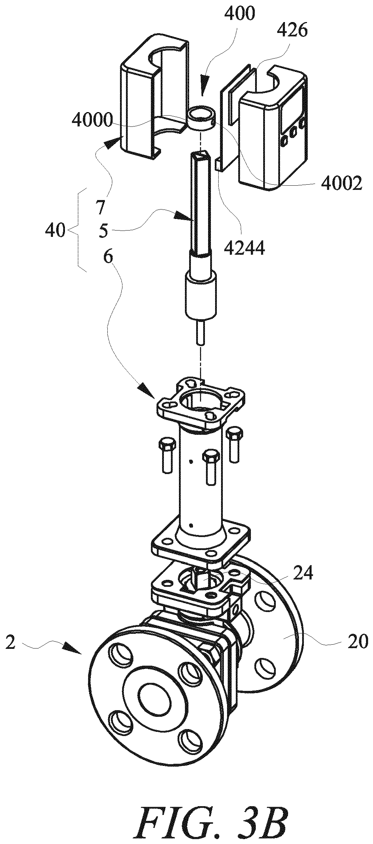

According to the prevent invention, the connection unit 40, as shown in Fig. 3A, includes a connection rod 5, a connection base 6 and a housing 7. One end of the connecting rod 5 is connected to the valve stem 24. A temperature sensing unit 4244 (for example, the temperature sensing unit 4244 may be an infrared temperature sensor, which emits light to the valve body 20, or a temperature resistor sensor; the temperature resistor contacts the valve body 20) is disposed inside the connection rod 5and close to the valve stem 24, so the temperature sensing unit 4244 can detect the temperature of the connection rod 5. As the temperature of the fluid passing through the valve body 20 can transmit to the connection rod 5, the temperature, detected by the temperature sensing unit 4244, of the connection rod 5 is almost equal to the temperature of the fluid passing through the valve body 20. In addition, the electrical connection point of the temperature sensing unit 4244 exposes from the surface of the connection rod 5. A conductive ring 50 is disposed at the surface of the connection rod 5 and opposite to the electrical connection point of the temperature sensing unit 4244. The sensing target 400 is disposed at the surface of the connection rod 5 and close to the conductive ring 50. The sensing target 400 includes a ring body 4000 and a magnetic body 4002 disposed on the ring body 4000. In an embodiment not according to the invention, as shown in Fig. 3B, the temperature sensing unit 4244 can also be installed on the circuit board of the connection body 40. The connection base 6 encircles the connection rod 5; one end of the connection base 6 is connected to the valve body 20, and the other end of the connection rod 5 protrudes from the connection base 6 to connect to the driver unit 44. The driver unit 44 may be an actuator, a pneumatic control switch or a hydraulic control switch. The housing 7 is disposed on the surface of the connection base 6.

Moreover, the control unit 42 is disposed inside the housing 7. The control unit 42 includes the circuit board 424 and an output unit 426. The sensing element 420 is disposed on the circuit board 424 and opposite to the sensing target 400. The circuit board 424 is provided with a calculation module 4240, a transmission module 4242 and an electrical connection module 4246. The calculation module 4240 is connected to the sensing element 420 to calculate the usage status information of the connection unit 40. The transmission module 4242 is connected to the calculation module 4240 and transmits the usage status information to the external device. The electrical connection module 4246 is electrically connected to the conductive ring 50 to supply power to the temperature sensing unit 4244 and transmit the temperature information. The output unit 426 is disposed on the housing 7 and connected to the calculation module 4240 to receive and output the usage status information and the temperature value; the output unit 426 may be a visible light displaying device or a voice alarm device. The transmission module 4242 can communicate with a personal mobile device, a wireless network transmitting-receiving device, a gateway or a cloud via wireless transmission, or communicate with a personal mobile device, a computer or a network workstation via wired transmission.

In the embodiment, the sensing element 420 may two or more than two Hall sensors or reed switch sensors, and the sensing target 400 may be a magnet. Thus, when the connection rod 5 rotates, the Hall sensor or the reed switch sensor can detect the change of the magnetic field and convert which into the change of the output voltage. The change of the output voltage can serve as the basis for the calculation module 4240 to further calculate the usage status information. For example, the calculation module 4240 can calculate the usage status information, including the rotation times of the valve base 22, the position of the valve base 22, the flow rate, etc., according to the voltage change. Accordingly, the user can determine whether the valve 2 malfunctions or not according to the usage status information, and immediately repair the valve 2. In addition, the polarity of the sensing target 400 orderly and repeatedly change (e.g. the polarity of the sensing target 400 continuously changes from N -> S -> N.........). Besides, the several sensing elements 420 on the circuit board 424are interlaced, so the voltage changes of some of the sensing elements 420 can be used to determine the rotation angle of the valve base 22. Furthermore, in order to avoid that the magnetic forces of the sensing target 400 is separated by the connection base 6, the connection base 6 can be made of a non-magnetic-conductible material, or the combination of magnetic-conductible material and non-magnetic-conductible material.

To sum up, when the driver unit 44 drives the connection unit 40 to move, the sensing target 400 and the sensing element 420 move in relation to each other. Therefore, the sensing target 420 can detect the change of the magnetic field and then the control unit 42 can generate the usage status information accordingly. In this way, the repair technician can immediately and periodically repair or maintain the valve 2 after reading the usage status information via the external device or the output unit 426 so as to avoid that the valve 2 or some components thereof are damaged because of metal fatigue.

## Claims

1. A repair alarm device (4) for smart valve (2), comprising:
a connection unit (40), adapted to be connected to a valve stem (24) of a smart valve (2) and provided with a sensing target (400) moving with the valve stem (24);
wherein the connection unit (40) includes a connection rod (5), a connection base (6) and a housing (7);
a control unit (42), provided with at least one sensing element (420); and
a driver unit (44), connected to the connection unit (40), and driving the connection unit (40) to allow for the valve stem (24) to be driven by the connection unit (40);
wherein a movement of the valve stem (24) between the sensing target (400) and the sensing element (420) is detected by the sensing element (420) to generate a sensing signal, whereby the control unit (42) generates a usage status information according to the sensing signal **characterized in that** a temperature sensing unit (4244) is disposed inside the connection rod (5) and in use is close to the valve stem (24), so the temperature sensing unit (4244) can detect the temperature of the connection rod (5).

2. The repair alarm device (4) for smart valve (2) of claim 1, further comprising a power source unit connected to the control unit (42) to supply power to the control unit (42).

3. The repair alarm device (4) for smart valve (2) of claim 1, wherein the control unit (42) comprises:
a calculation module (4240), connected to the sensing element (420) and configured to calculate a usage status information of the valve stem (24) of the smart valve (2) according to the sensing signal; and
a transmission module (4242), connected to the calculation module (4240) and configured to transmit the usage status information of the valve stem (24) to an external device.

4. The repair alarm device (4) for smart valve (2) of claim 3, wherein the control unit (42) further comprises the temperature sensing unit (4244) connected to the calculation module (4240), the temperature sensing unit (4244) configured to detect a temperature of a fluid in a valve body (20) of the smart valve (2) to generate a temperature signal; the calculation module (4240) calculates a temperature value according to the temperature signal and the transmission module (4242) transmits the temperature value to the external device.

5. The repair alarm device (4) for smart valve (2) of claim 4, wherein the control unit (42) further comprises an output unit (426) connected to the calculation module (4240), and configured to receive and output the usage status information and the temperature value.

6. The repair alarm device (4) for smart valve (2) of claim 1, wherein the sensing element (420) is a or a Hall sensor or a reed switch sensor, and the sensing target (400) is a magnet.

7. The repair alarm device (4) for smart valve (2) of claim 1, wherein the connection unit (40) further comprises:
a connection rod (5), one end of the connection rod (5) being adapted to be connected to the valve stem (24) and the sensing target (400) being disposed on a surface of the connection rod (5);
a connection base (6), encircling the connection rod (5), wherein one end of the connection base (6) is adapted to be connected to a valve body (20) of the smart valve (2), and the other end of the connection rod (5) protrudes from the connection base (6) to connect to the driver unit (44); and
a housing (7), disposed on the connection base (6).

8. The repair alarm device (4) for smart valve (2) of claim 7, wherein the control unit (42) is disposed in the housing (7) and comprises:
a circuit board (424), the sensing element (420) being disposed on the circuit board (424) and opposite to the sensing target (400), and the circuit board (424) being provided with a calculation module (4240), a transmission module (4242) and an electrical connection module (4246), wherein the calculation module (4240) is connected to the sensing element (420) to calculate a usage status information of the connection unit (40); the transmission module (4242) is connected to the calculation module (4240) and transmits the usage status information of the connection unit (40) to the external device; the electrical connection module (4246) is electrically connected to a conductive ring (50) to supply power to a temperature sensing unit (4244) and transmit a temperature information;
an output unit (426), disposed on the housing (7) and connected to the calculation module (4240) to receive and output the usage status information of the connection unit (40) and the temperature information.

9. The repair alarm device (4) for smart valve (2) of claim 3, wherein the transmission module (4242) communicates with a personal mobile device, a wireless network transmitting-receiving device, a gateway or a cloud via wireless transmission.

10. The repair alarm device (4) for smart valve (2) of claim 3, wherein the transmission module (4242) communicates with a personal mobile device, a computer or a network workstation via wired transmission.

11. The repair alarm device (4) for smart valve (2) of claim 5 or claim 8, wherein the output unit (426) is a visible light displaying device or a voice alarm device.

## Patentansprüche

1. Reparatur - Alarmanlage (4) für ein intelligentes Ventil (2), umfassend:
eine Verbindungseinheit (40), die angepasst ist, mit einem Ventilschaft (24) eines intelligenten Ventils (2) verbunden zu werden, und die mit einem Erfassungsobjekt (400) versehen ist, das sich mit dem Ventilschaft (24) bewegt,
wobei die Verbindungseinheit (40) eine Verbindungsstange (5), eine Verbindungsbasis (6) und ein Gehäuse (7) umfasst,
eine Steuereinheit (42), die mit mindestens einem Sensorelement (420) versehen ist, und
eine Antriebseinheit (44), die mit der Verbindungseinheit (40) verbunden ist und die Verbindungseinheit (40) antreibt, damit der Ventilschaft (24) von der Verbindungseinheit (40) angetrieben werden kann,
wobei eine Bewegung des Ventilschafts (24) zwischen dem Erfassungsobjekt (400) und dem Sensorelement (420), durch das Sensorelement (420) erfasst wird, um ein Erfassungssignal zu erzeugen, wodurch die Steuereinheit (42) eine Verwendungsstatusinformation gemäß dem Erfassungssignal erzeugt,
**dadurch gekennzeichnet, dass**
eine Temperatur - Sensoreinheit (4244) im Inneren der Verbindungsstange (5) angeordnet ist und sich im Gebrauch in der Nähe des Ventilschafts (24) befindet, so dass die Temperatur - Sensoreinheit (4244) die Temperatur der Verbindungsstange (5) erfassen kann.

2. Reparatur - Alarmanlage (4) für ein intelligentes Ventil (2) nach Anspruch 1, die ferner eine Stromquelleneinheit umfasst, die mit der Steuereinheit (42) verbunden ist, um der Steuereinheit (42) Strom zuzuführen.

3. Reparatur - Alarmanlage (4) für ein intelligentes Ventil (2) nach Anspruch 1, bei welcher die Steuereinheit (42) umfasst:
ein Berechnungsmodul (4240), das mit dem Sensorelement (420) verbunden und so konfiguriert ist, dass es eine Benutzungsstatusinformation des Ventilschafts (24) des intelligenten Ventils (2) gemäß dem Erfassungssignal berechnet, und
ein Übertragungsmodul (4242), das mit dem Berechnungsmodul (4240) verbunden und so konfiguriert ist, dass es die Benutzungsstatusinformationen des Ventilschafts (24) an eine externe Vorrichtung überträgt.

4. Reparatur - Alarmanlage (4) für ein intelligentes Ventil (2) nach Anspruch 3, bei welcher die Steuereinheit (42) ferner die Temperatur - Sensoreinheit (4244) umfasst, die mit dem Berechnungsmodul (4240) verbunden ist, wobei die Temperatur - Sensoreinheit (4244) so konfiguriert ist, dass sie eine Temperatur eines Fluids in einem Ventilkörper (20) des intelligenten Ventils (2) erfasst, um ein Temperatursignal zu erzeugen, wobei das Berechnungsmodul (4240) einen Temperaturwert entsprechend dem Temperatursignal berechnet und das Übertragungsmodul (4242) den Temperaturwert an die externe Vorrichtung überträgt.

5. Reparatur - Alarmanlage (4) für ein intelligentes Ventil (2) nach Anspruch 4, bei welcher die Steuereinheit (42) ferner eine Ausgabeeinheit (426) umfasst, die mit dem Berechnungsmodul (4240) verbunden und so konfiguriert ist, dass sie die Nutzungsstatusinformationen und den Temperaturwert empfängt und ausgibt.

6. Reparatur - Alarmanlage (4) für ein intelligentes Ventil (2) nach Anspruch 1, bei welcher das Sensorelement (420) ein Hall - Sensor oder ein Reed - Schalter - Sensor ist, und das Erfassungsobjekt (400) ein Magnet ist.

7. Reparatur - Alarmanlage (4) für ein intelligentes Ventil (2) nach Anspruch 1, bei welcher die Verbindungseinheit (40) ferner umfasst:
eine Verbindungsstange (5), wobei ein Ende der Verbindungsstange (5) angepasst ist, mit dem Ventilschaft (24) verbunden zu werden, und das Erfassungsobjekt (400) auf einer Oberfläche der Verbindungsstange (5) angeordnet ist,
eine Verbindungsbasis (6), die die Verbindungsstange (5) umgibt, wobei ein Ende der Verbindungsbasis (6) dazu ausgelegt ist, mit einem Ventilkörper (20) des intelligenten Ventils (2) verbunden zu werden, und das andere Ende der Verbindungsstange (5) aus der Verbindungsbasis (6) herausragt, um mit der Treibereinheit (44) verbunden zu werden, und
ein Gehäuse (7), das auf der Verbindungsbasis (6) angeordnet ist.

8. Reparatur - Alarmanlage (4) für ein intelligentes Ventil (2) nach Anspruch 7, bei welcher die Steuereinheit (42) im Gehäuse (7) angeordnet ist und umfasst:
eine Leiterplatte (424), wobei das Sensorelement (420) auf der Leiterplatte (424) und gegenüber dem Erfassungsobjekt (400) angeordnet ist, und die Leiterplatte (424) mit einem Berechnungsmodul (4240), einem Übertragungsmodul (4242) und einem elektrischen Verbindungsmodul (4246) versehen ist, wobei das Berechnungsmodul (4240) mit dem Sensorelement (420) verbunden ist, um eine Nutzungsstatusinformation der Verbindungseinheit (40) zu berechnen, wobei das Übertragungsmodul (4242) mit dem Berechnungsmodul (4240) verbunden ist und die Nutzungsstatusinformation der Verbindungseinheit (40) an die externe Vorrichtung überträgt, wobei das elektrische Verbindungsmodul (4246) elektrisch mit einem leitenden Ring (50) verbunden ist, um eine Temperatur - Sensoreinheit (4244) mit Strom zu versorgen und eine Temperaturinformation zu übertragen,
eine Ausgabeeinheit (426), die an dem Gehäuse (7) angeordnet und mit dem Berechnungsmodul (4240) verbunden ist, um die Nutzungsstatusinformationen der Verbindungseinheit (40) und die Temperaturinformationen zu empfangen und auszugeben.

9. Reparatur - Alarmanlage (4) für ein intelligentes Ventil (2) nach Anspruch 3, bei welcher das Übertragungsmodul (4242) über eine drahtlose Übertragung mit einem persönlichen Mobilgerät, einer drahtlosen Netzwerk - Sende - Empfangsvorrichtung, einem Gateway oder einer Cloud kommuniziert.

10. Reparatur - Alarmanlage (4) für ein intelligentes Ventil (2) nach Anspruch 3, bei welcher das Übertragungsmodul (4242) mit einem persönlichen mobilen Gerät, einem Computer oder einer Netzwerk - Arbeitsstation über eine drahtgebundene Übertragung kommuniziert.

11. Reparatur - Alarmanlage (4) für ein intelligentes Ventil (2) nach Anspruch 5 oder Anspruch 8, bei welcher die Ausgabeeinheit (426) eine Anzeigevorrichtung für sichtbares Licht oder eine Sprachalarmvorrichtung ist.

## Revendications

1. Dispositif d'alarme de réparation (4) pour une vanne intelligente (2), comprenant:
une unité de connexion (40), adaptée pour être connectée à une tige de vanne (24) d'une vanne intelligente (2) et munie d'une cible de détection (400) se déplaçant avec la tige de vanne (24);
dans lequel l'unité de connexion (40) inclut une tige de connexion (5), une base de connexion (6) et un boîtier (7);
une unité de commande (42), pourvue d'au moins un élément de détection (420);
et
une unité d'entraînement (44), connectée à l'unité de connexion (40), et entraînant l'unité de connexion (40) pour permettre à la tige de vanne (24) d'être entraînée par l'unité de connexion (40);
dans lequel un déplacement de la tige de vanne (24) entre la cible de détection (400) et l'élément de détection (420) est détecté par l'élément de détection (420) pour générer un signal de détection, selon lequel l'unité de commande (42) génère une information d'état d'utilisation selon le signal de détection
**caractérisé en ce que**
une unité de détection de température (4244) est disposée à l'intérieur de la tige de connexion (5) et, en utilisation, est proche de la tige de vanne (24), de sorte que l'unité de détection de température (4244) peut détecter la température de la tige de connexion (5).

2. Dispositif d'alarme de réparation (4) pour une vanne intelligente (2) selon la revendication 1, comprenant en outre une unité de source de puissance connectée à l'unité de commande (42) pour fournir de la puissance à l'unité de commande (42).

3. Dispositif d'alarme de réparation (4) pour une vanne intelligente (2) selon la revendication 1, dans lequel l'unité de commande (42) comprend:
un module de calcul (4240), connecté à l'élément de détection (420) et configuré pour calculer une information d'état d'utilisation de la tige de vanne (24) de la vanne intelligente (2) en fonction du signal de détection; et
un module de transmission (4242), connecté au module de calcul (4240) et configuré pour transmettre l'information d'état d'utilisation de la tige de vanne (24) à un dispositif externe.

4. Dispositif d'alarme de réparation (4) pour une vanne intelligente (2) selon la revendication 3, dans lequel l'unité de commande (42) comprend en outre l'unité de détection de température (4244) connectée au module de calcul (4240), l'unité de détection de température (4244) étant configurée pour détecter une température d'un fluide dans un corps de vanne (20) de la vanne intelligente (2) afin de générer un signal de température, le module de calcul (4240) calcule une valeur de température selon le signal de température et le module de transmission (4242) transmet la valeur de température au dispositif externe.

5. Dispositif d'alarme de réparation (4) pour une vanne intelligente (2) selon la revendication 4, dans lequel l'unité de commande (42) comprend en outre une unité de sortie (426) connectée au module de calcul (4240), et configurée pour recevoir et délivrer en sortie l'information d'état d'utilisation et la valeur de température.

6. Dispositif d'alarme de réparation (4) pour une vanne intelligente (2) selon la revendication 1, dans lequel l'élément de capteur (420) est un capteur à effet Hall ou un capteur à contact en ampoule, et la cible de détection (400) est un aimant.

7. Dispositif d'alarme de réparation (4) pour une vanne intelligente (2) selon la revendication 1, dans lequel l'unité de connexion (40) comprend en outre:
une tige de connexion (5), une extrémité de la tige de connexion (5) étant adaptée pour être connectée à la tige de vanne (24) et la cible de détection (400) étant disposée sur une surface de la tige de connexion (5);
une base de connexion (6), encerclant la tige de connexion (5), dans lequel une extrémité de la base de connexion (6) est adaptée pour être connectée à un corps de vanne (20) de la vanne intelligente (2), et l'autre extrémité de la tige de connexion (5) fait saillie à partir de la base de connexion (6) pour se connecter à l'unité d'entraînement (44);
et
un boîtier (7), disposé sur la base de connexion (6).

8. Dispositif d'alarme de réparation (4) pour une vanne intelligente (2) selon la revendication 7, dans lequel l'unité de commande (42) est disposée dans le boîtier (7) et comprend:
une carte de circuit (424), l'élément de détection (420) étant disposé sur la carte de circuit (424) et à l'opposé de la cible de détection (400), et la carte de circuit (424) étant munie d'un module de calcul (4240), d'un module de transmission (4242) et d'un module de connexion électrique (4246), dans lequel le module de calcul (4240) est connecté à l'élément de détection (420) pour calculer une information d'état d'utilisation de l'unité de connexion (40); le module de transmission (4242) est connecté au module de calcul (4240) et transmet l'information d'état d'utilisation de l'unité de connexion (40) au dispositif externe; le module de connexion électrique (4246) est connecté électriquement à un anneau conducteur (50) pour fournir de la puissance à une unité de détection de température (4244) et transmettre une information de température;
une unité de sortie (426), disposée sur le boîtier (7) et connectée au module de calcul (4240) pour recevoir et délivrer en sortie l'information d'état d'utilisation de l'unité de connexion (40) et l'information de température.

9. Dispositif d'alarme de réparation (4) pour une vanne intelligente (2) selon la revendication 3, dans lequel le module de transmission (4242) communique avec un dispositif mobile personnel, un dispositif d'émission-réception de réseau sans fil, une passerelle ou un nuage via une transmission sans fil.

10. Dispositif d'alarme de réparation (4) pour une vanne intelligente (2) selon la revendication 3, dans lequel le module de transmission (4242) communique avec un dispositif mobile personnel, un ordinateur ou un poste de travail de réseau via une transmission câblée.

11. Dispositif d'alarme de réparation (4) pour une vanne intelligente (2) selon la revendication 5 ou la revendication 8, dans lequel l'unité de sortie (426) est un dispositif d'affichage de lumière visible ou un dispositif d'alarme vocale.
